# EUROPÄISCHE PATENTANMELDUNG

(11) **EP 4 675 224 A1**
(43) Veröffentlichungstag der Anmeldung: **07.01.2026**
(21) Anmeldenummer: 25186897.2
(22) Anmeldetag: 02.07.2025
(51) Int. Cl.: G01B 11/25

(54) **VERFAHREN UND MESSSYSTEM ZUR ERSTELLUNG VON 3D-PUNKTEWOLKEN**

(30) Priorität: 03.07.2024 AT 505492024
(71) Anmelder: AIT Austrian Institute of Technology GmbH, 1210 Wien (AT)
(72) Erfinder: NOWAK, Christoph, 1100 Wien (AT); KAPELLER, Christian, 1160 Wien (AT); ANTENSTEINER, Doris, 1110 Wien (AT); MÜLLNER, Felix, 1210 Wien (AT); SCHNEIDER, Philipp, 1210 Wien (AT); STADERINI, Vanessa, 1020 Wien (AT)
(74) Vertreter: Wildhack & Jellinek Patentanwälte GmbH

(57) **Zusammenfassung**

Die Erfindung betrifft ein Verfahren zur Erstellung, insbesondere metrisch skalierter, 3D-Punktewolken, insbesondere dreidimensionaler (3D)-Oberflächenrekonstruktionen von Objekten, mit einem Messsystem umfassend
- zumindest einen Bildsensor (2), insbesondere einen Videosensor,
- zumindest drei Beleuchtungseinheiten (4) in Form von Punktlichtquellen zur Abgabe von, insbesondere multispektralem, Licht auf ein zu erfassendes Objekt im Aufnahmebereich des zumindest einen Bildsensors (2),
- zumindest einen Lichtmusterprojektor (3) zur Projektion eines gerichteten Zufallsbilds auf ein zu erfassendes Objekt im Aufnahmebereich des zumindest einen Bildsensors (2),

- wobei die Beleuchtungseinheiten (4) aufeinanderfolgend zur Abgabe von Licht angesteuert werden, und/oder der zumindest eine Lichtmusterprojektor (3) zur Projektion eines gerichteten Zufallsbilds angesteuert wird,
- wobei von dem zumindest einen Bildsensor (2) jeweils zumindest eine photogrammetrische Aufnahme in Form einer metrisch skalierten 3D-Punktewolke pro Projektion eines Zufallsbilds durch den zumindest einen Lichtmusterprojektor (3) erstellt wird, und
- wobei jeweils zumindest eine photometrische Aufnahme in Form einer 3D-Punktewolke aus einer Sequenz von zumindest drei Aufnahmen des zumindest einen Bildsensors (2) erstellt wird,
- wobei die zumindest drei Aufnahmen unter Beleuchtung durch jeweils verschiedene Beleuchtungskombinationen erstellt werden, und
- wobei eine Beleuchtungskombination einer Beleuchtung durch verschiedene Beleuchtungseinheiten (4), die aufeinanderfolgend, insbesondere einzeln oder aggregiert, aktiviert werden und sich zumindest in ihrer Position, insbesondere ihrer Pose, bezüglich des zumindest einen Bildsensors (2) unterscheiden, entspricht.

oder zumindest wenigen Abschattungen zur Erstellung von 3D-Punktewolken von Oberflächen von Messobjekten mit komplizierten Topografien und/oder schwierigen Oberflächeneigenschaften für die 3D-Oberflächenrekonstuktion bereitzustellen.

## Beschreibung

Die Erfindung betrifft ein Verfahren bzw. ein Messsystem zur Erstellung von, insbesondere metrisch skalierten, dreidimensionalen (3D)-Punktewolken gemäß Patentanspruch 1 bzw. 11.

Aus dem Stand der Technik sind zur 3D-Vermessung von Objekten mit unkooperativen Oberflächen (z.B. sehr dunkle, strukturlose, stark reflektierende oder spiegelnde Oberflächen) verschiedene Verfahren bekannt. Einerseits stehen taktile 3D-Messsysteme zur Verfügung, mittels denen eine taktile Vermessung der Oberflächen, bei der durch Punktantastungen Höhenunterschiede oder Absolutwerte für die Koordinaten ausgegeben werden, zur Verfügung (H.-G. Pressel, T. Hageney: "Messunsicherheit von Prüfmerkmalen in der Koordinatenmesstechnik", 2007, Expert-Verlag; M. Hernla: "Messunsicherheit bei Koordinatenmessungen: Abschätzung der aufgabenspezifischen Messunsicherheit durch Unsicherheitsbilanzen", 2016, Expert-Verlag). Nachteilig bei derartigen Messverfahren ist jedoch, dass nur eine sehr begrenzte Anzahl von Messpunkten pro Zeiteinheit erfasst werden können, sodass eine flächenhafte Messung durch Antasten einen Zeitaufwand von einigen Minuten bis zu Stunden, je nach Objekt, erfordern kann.

Weiters ist aus der DE 102021001366 A1 ein Verfahren bekannt, bei dem optische Muster mit Licht in einem Wellenlängenbereich deutlich unterhalb des sichtbaren Lichts mit hoher Abbildungsrate auf die dreidimensional zu vermessende Objektoberfläche projiziert werden. Das Muster wird in seinem Wechsel von einem Detektor als standortunterschiedliche korrespondierende Bildmuster der zu vermessenden Objektoberfläche erfasst und zur Gewinnung von 3D-Informationen ausgewertet. Nachteilig bei derartigen Verfahren mit Lichtmusterprojektion ist jedoch, dass bei Messobjekten mit komplexen Topografien Abschattungen auftreten können, da entweder das projizierte Lichtmuster nicht in den abgeschatteten Bereichen auftrifft, oder das von der Oberfläche reflektierte Licht nicht erfasst werden kann. Zudem stellen unkooperative Oberflächen eine Herausforderung für Verfahren mit Lichtmusterprojektion dar, weil die auf das Messobjekt projizierten Lichtmuster stark absorbiert oder gar nicht reflektiert werden können. In der CN112629440A werden die Methoden Streifenprojektion oder dynamische Streifenprojektion (https://de.wikipedia.org/wiki/Streifenprojektion, zuletzt aufgerufen am 12. Juni 2024) für Structured Light verwendet.

Aufgabe der Erfindung ist es daher, bezüglich der oben angeführten Probleme Abhilfe zu schaffen und ein zeitlich und qualitativ optimiertes, berührungsloses Verfahren mit keinerlei oder zumindest wenigen Abschattungen zur Erstellung von 3D-Punktewolken von Oberflächen von Messobjekten mit komplizierten Topografien und/oder schwierigen Oberflächeneigenschaften für die 3D-Oberflächenrekonstuktion bereitzustellen.

Die Erfindung löst diese Aufgabe mit einem Verfahren zur Erstellung, insbesondere metrisch skalierter, 3D-Punktewolken, insbesondere 3D-Oberflächenrekonstruktionen, von Objekten gemäß Patentanspruch 1.

Erfindungsgemäß ist dabei vorgesehen, dass ein Messsystem umfassend
- zumindest einen Bildsensor, insbesondere einen Videosensor,
- zumindest drei Beleuchtungseinheiten in Form von Punktlichtquellen zur Abgabe von, insbesondere multispektralem, Licht auf ein zu erfassendes Objekt im Aufnahmebereich des zumindest einen Bildsensors, und
- zumindest einen Lichtmusterprojektor zur Projektion eines gerichteten Zufallsbilds auf ein zu erfassendes Objekt im Aufnahmebereich des zumindest einen Bildsensors,
zum Einsatz kommt. Erfindungsgemäß ist weiters vorgesehen,
- dass die Beleuchtungseinheiten aufeinanderfolgend zur Abgabe von Licht angesteuert werden, und/oder der zumindest eine Lichtmusterprojektor zur Projektion eines gerichteten Zufallsbilds angesteuert wird,
- dass von dem zumindest einen Bildsensor jeweils zumindest eine photogrammetrische Aufnahme in Form einer metrisch skalierten 3D-Punktewolke pro Projektion eines Zufallsbilds durch den zumindest einen Lichtmusterprojektor erstellt wird, und
- dass jeweils zumindest eine photometrische Aufnahme in Form einer 3D-Punktewolke aus einer Sequenz von zumindest drei Aufnahmen des zumindest einen Bildsensors erstellt wird,
   - wobei die zumindest drei Aufnahmen unter Beleuchtung durch jeweils verschiedene Beleuchtungskombinationen erstellt werden, und
   - wobei eine Beleuchtungskombination einer Beleuchtung durch verschiedene Beleuchtungseinheiten (4), die aufeinanderfolgend, insbesondere einzeln oder aggregiert, aktiviert werden und sich in ihrer Orientierung und/oder Position, insbesondere ihrer Pose, bezüglich des zumindest einen Bildsensors (2) unterscheiden, entspricht.

Durch diese Ausgestaltung eine erfindungsgemäßen Verfahrens ist es vorteilhafterweise möglich, die beiden unterschiedlichen 3D-Messmethoden des photometrischen Stereo und des photogrammetrischen Stereo zu kombinieren und so 3D-Punktewolken für die berührungslose 3D-Oberflächenrekonstuktion von Messobjekten mit komplexen Topografien und/oder schwierigen Oberflächeneigenschaften bereitzustellen.

Mittels photometrischem Stereo ist es möglich, speziell auch hoch-reflektierende Oberflächen zu rekonstruieren. Nicht spiegelnde sowie schwach reflektierende Messobjektoberflächen können sehr gut mit Hilfe der Methode des photogrammetrischen Stereo rekonstruiert werden.

Ein erfindungsgemäßes Verfahren eignet sich weiters besonders für die 3D-Rekonstruktion und 3D-Modellierung für industrielle und medizinische 3D-Messaufgaben und umfassen beispielsweise die stationäre oder mit Hilfe von Aktuatoren durchgeführte 3D-Rekonstruktion und 3D-Modellierung und Vermessung von beliebigen 3D-Objekten.

Wird ein einzelner Bildsensor bzw. eine einzelne Videokamera jeweils gemeinsam für die beiden 3D-Messverfahren des photometrischen Stereo und des photogrammetrischen Stereo eingesetzt, befinden sich die aus den beiden Messverfahren photometrisches Stereo und photogrammetrisches Stereo je Messsystem- bzw. Objekt-Pose abgeleiteten 3D-Punktewolken vorteilhafterweise inhärent, d.h. ohne zusätzliche Kalibrierung/Transformation im selben Koordinatensystem, sofern das optische Zentrum des Bildsensors bzw. der Videokamera als Ursprung der Koordinatensysteme für die 3D-Messdaten aus den beiden Messverfahren angenommen wird.

Durch eine Vielzahl realisierbarer Sequenzen von zumindest drei Aufnahmen unter jeweils verschiedenen Beleuchtungskombinationen kann mit einem erfindungsgemäßen Verfahren sowohl die Konfiguration nahfeld- als auch fernfeld-photometrisches Stereo realisiert werden. Nahfeld-photometrisches Stereo beruht dabei auf der Modellierung der Beleuchtung bestehend aus einzelnen Punktlichtquellen, wohingegen fernfeld-photometrisches Stereo auf der Modellierung der Beleuchtung aus mehreren einzelnen, kollimierten Lichtquellen beruht.

Unter einer Beleuchtungskombination wird im Zusammenhang mit der Erfindung eine Beleuchtung durch verschiedene, insbesondere einzeln oder aggregierte Beleuchtungseinheiten, verstanden, wobei die Beleuchtungseinheiten sich in ihrer Orientierung und/oder Position, insbesondere ihrer Pose, bezüglich des zumindest einen Bildsensors unterscheiden. Unter aggregierter Abgabe von Licht wird im Zusammenhang mit der Erfindung verstanden, dass mehrere Beleuchtungseinheiten gleichzeitig gemeinsam Licht abgeben. Unter der unterschiedlichen Konfiguration des photometrischen Stereo wird im Zusammenhang mit der Erfindung verstanden, dass nahfeld-photometrisches Stereo auf der Modellierung der Beleuchtung bestehend aus einzelnen Punktlichtquellen beruht, wohingegen fernfeld-photometrisches Stereo auf der Modellierung der Beleuchtung aus mehreren einzelnen, kollimierten Lichtquellen beruht.

Weitere vorteilhafte Ausführungsvarianten eines erfindungsgemäßen Verfahrens zur Erstellung, insbesondere metrisch skalierter, 3D-Punktewolken, insbesondere 3D-Oberflächenrekonstruktionen, von Objekten sind in den abhängigen Ansprüchen beschrieben.

Gemäß einer vorteilhaften Ausführungsvariante eines erfindungsgemäßen Verfahrens kann vorgesehen sein,
- dass vorab eine photometrische Kalibration des zumindest einen Bildsensors und der Beleuchtungseinheiten mit einem Kalibrationsobjekt vorgenommen wird, wobei im Rahmen der Kalibration zumindest die Position, Ausrichtung, sowie die relative Lichtintensität jeder Lichtquelle zu jedem Bildsensor ermittelt werden,
- dass eine metrische Skalierung der unter Verwendung des zumindest einen Bildsensors und der Beleuchtungseinheiten ermittelten photometrischen Aufnahmen vorgenommen wird, anhand der unter Verwendung des zumindest einen Bildsensors und des zumindest einen Lichtmusterprojektors erstellten photogrammetrischen Aufnahmen und
- dass die erstellten photometrischen Aufnahmen und die erstellten photogrammetrischen Aufnahmen derart in eine gemeinsame metrisch skalierte 3D-Punktewolke zusammengeführt werden.

Bei dieser Ausgestaltungsvariante eines erfindungsgemäßen Verfahrens können 3D-Positionen aus photogrammetrischem Stereo genutzt werden, um die Rekonstruktion der Oberflächennormalen von Materialien mit komplexen Reflektanzeigenschaften aus photometrischem Stereo zu optimieren. Umgekehrt kann photometrisches Stereo dazu benutzt werden, um die lokale Oberflächenausrichtung in Form von Oberflächennormalen der resultierenden Messobjektoberfläche aus photogrammetrischem Stereo genauer zu bestimmen. Dies umfasst speziell auch die Rekonstruktion hoch-reflektierender Oberflächen. Durch die Fusion der 3D-Position aus dem photogrammetrischen Stereo und der Oberflächenausrichtung aus dem photometrischen Stereo kann die metrische Skalierung der vom Messsystem generierten Daten besser den realen Dimensionen des Messobjekts angeglichen werden (erhöhte Maßstabstreue).

Unter dem photometrischen System eines erfindungsgemäßen Messsystems wird im Zusammenhang mit der Erfindung eine Kombination des zumindest einen Bildsensors und mehrerer Beleuchtungseinheiten verstanden, während unter dem photogrammetrischen System eines erfindungsgemäßen Messsystems eine Kombination des zumindest einen Bildsensors und des zumindest einen Lichtmusterprojektors verstanden wird.

Gemäß einer weiteren vorteilhaften Ausführungsvariante eines erfindungsgemäßen Verfahrens kann vorgesehen sein, dass eine lokale Optimierung zur Verbesserung der Tiefe der einzelnen Punkte der 3D-Punktewolke vorgenommen wird, wobei im Rahmen der Optimierung die lokalen Oberflächennormalen gewichtet angepasst werden. Diese Optimierung der Oberflächennormalen kann beispielsweise durch die relativ und lokal genau ermittelten Oberflächennormalen aus der photometrischen Aufnahme aus mindestens drei Beleuchtungsrichtungen erfolgen. Diese lokal genaue Oberflächenorientierung kann verwendet werden, um die global genaue Oberflächenrekonstruktion der mit Hilfe von Lichtmusterprojektoren berechneten 3D-Punktewolke aus den photogrammetrischen Aufnahmen zu verbessern.

Gemäß einer weiteren vorteilhaften Ausführungsvariante eines erfindungsgemäßen Verfahrens kann vorgesehen sein,
- dass die Beleuchtungseinheiten zur Erstellung von nahfeld-photometrischen Aufnahmen einzeln aufeinanderfolgend in einer Sequenz zur Abgabe von Licht angesteuert werden, und/oder
- dass aufeinanderfolgend in einer Sequenz mehrere Beleuchtungseinheiten aggregiert gleichzeitig zur Erstellung von fernfeld-photometrischen Aufnahmen zur Abgabe von Licht angesteuert werden.

Bei dieser Ausgestaltungsvariante eines erfindungsgemäßen Verfahrens können die berührungslosen 3D-Oberflächenrekonstuktionsverfahren nah-/fernfeld-photometrisches Stereo und photogrammetrisches Stereo gemeinsam genutzt werden. Je räumlicher Lage oder Pose des Messsystems bzw. des zu vermessenden Objekts kann auf diese Weise auch bei schwierig zu vermessenden Messobjektoberflächen eine dichte, metrisch skalierte 3D-Punktewolke der Messobjektoberfläche erzeugt werden.

Gemäß einer weiteren vorteilhaften Ausführungsvariante eines erfindungsgemäßen Verfahrens kann vorgesehen sein,
- dass das Messsystem mehrere Lichtmusterprojektoren zur Projektion eines gerichteten Zufallsbilds auf ein zu erfassendes Objekt im Aufnahmebereich des zumindest einen Bildsensors umfasst, und
- dass die Lichtmusterprojektoren einzeln aufeinanderfolgend in einer Sequenz zur Projektion eines gerichteten Zufallsbilds angesteuert werden, wobei von dem zumindest einen Bildsensor jeweils zumindest eine photogrammetrische Aufnahme pro Projektion eines Zufallsbilds durch einen der Lichtmusterprojektoren erstellt wird.

Bei dieser Ausgestaltungsvariante eines erfindungsgemäßen Verfahrens können das berührungslose 3D-Oberflächenrekonstuktionsverfahren photometrisches Stereo und mehrprojektor-/mehrbildsensor- bzw. mehrkamera-photogrammetrisches Stereo gemeinsam genutzt werden. Je räumlicher Lage oder Pose des Messsystems bzw. des zu vermessenden Objekts kann auf diese Weise auch bei schwierig zu vermessenden Messobjektoberflächen eine dichte, metrisch skalierte 3D-Punktewolke der Messobjektoberfläche erzeugt werden.

Gemäß einer weiteren vorteilhaften Ausführungsvariante eines erfindungsgemäßen Verfahrens kann vorgesehen sein,
- dass das Messsystem und das zu erfassende Objekt in mehreren Posen, insbesondere in mehreren Orientierungen und/oder Positionen, relativ zueinander positioniert werden,
- dass in jeder Pose, insbesondere in jeder Orientierung und/oder Position, von dem zumindest einen Bildsensor jeweils zumindest eine photogrammetrische Aufnahme in Form einer 3D-Punktewolke pro Projektion eines Zufallsbilds durch den jeweiligen Lichtmusterprojektor erstellt wird,
- dass in jeder Pose, insbesondere in jeder Orientierung und/oder Position, jeweils zumindest eine photometrische Aufnahme in Form einer 3D-Punktewolke aus einer Sequenz von zumindest drei Aufnahmen des zumindest einen Bildsensors erstellt wird,
   - wobei die zumindest drei Aufnahmen unter Beleuchtung durch jeweils verschiedene Beleuchtungskombinationen erstellt werden, und
   - wobei eine Beleuchtungskombination einer Beleuchtung durch verschiedene Beleuchtungseinheiten, die aufeinanderfolgend, insbesondere einzeln oder aggregiert, aktiviert werden und sich in ihrer Orientierung und/oder Position, insbesondere ihrer Pose, bezüglich des zumindest einen Bildsensors unterscheiden, entspricht.

Durch die Platzierung des Messsystems und des zu vermessenden Objekts relativ zueinander in verschiedenen Posen und die Erstellung von Aufnahmen in den einzelnen Posen wird vorteilhafterweise sichergestellt, dass die einzelnen erstellten 3D-Punktewolken des photometrischen Stereo und des photogrammetrischen Stereo keinerlei oder zumindest wenige, beispielsweise durch Abschattungen bzw. Verdeckungen bedingte, Fehlstellen bzw. Ungenauigkeiten aufweisen.

In diesem Zusammenhang kann insbesondere vorgesehen sein, dass die in den einzelnen Posen, insbesondere den einzelnen Orientierungen und/oder Positionen, erstellten photometrischen Aufnahmen und die in den einzelnen Posen erstellten photogrammetrischen Aufnahmen in eine gemeinsame und metrisch skalierte 3D-Punktewolke zusammengeführt werden.

Durch diese Ausgestaltung eines erfindungsgemäßen Verfahrens kann vorteilhafterweise sichergestellt werden, dass die gemeinsame und metrisch skalierte 3D-Punktewolke für die Oberflächenrekonstruktion keinerlei oder zumindest wenige, beispielsweise durch Abschattungen bzw. Verdeckungen bedingte, Fehlstellen bzw. Ungenauigkeiten aufweist.

Gemäß einer weiteren vorteilhaften Ausführungsvariante eines erfindungsgemäßen Verfahrens kann vorgesehen sein, dass für die einzelnen erstellten Aufnahmen, insbesondere in jeder Pose, gemessene Objekteigenschaften, insbesondere Albedo, Reflektanzeigenschaften, Textur, Rauheit, bereitgestellt werden.

Gemäß einer weiteren vorteilhaften Ausführungsvariante eines erfindungsgemäßen Verfahrens kann vorgesehen sein,
- dass das Messsystem zumindest zwei Bildsensoren umfasst,
- dass vorab eine geometrische Kalibrierung der zumindest zwei Bildsensoren zueinander durchgeführt wird, indem für jeden der zumindest zwei Bildsensoren jeweils eine Transformation in ein gemeinsames Koordinatensystem ermittelt wird, wobei diese Transformationen jeweils
   - einer mit einem der Bildsensoren ermittelten Position eines Messraumpunkts genau eine Position im gemeinsamen Koordinatensystem zuordnet, und
   - gegebenenfalls der jeweils mit zumindest einem anderen Bildsensor ermittelten Position desselben Messraumpunkts dieselbe Position im gemeinsamen Koordinatensystem zuordnet, und
- dass die mit den einzelnen Bildsensoren erstellten photometrischen Aufnahmen und die erstellten photogrammetrischen Aufnahmen unter Anwendung der ermittelten Transformationen in ein gemeinsames Koordinatensystem überführt werden und anschließend durch Skalierung anhand der ermittelten geometrischen Kalibrierung in eine gemeinsame und metrisch skalierte 3D-Punktewolke zusammengeführt werden.

Werden zwei oder mehr Bildsensoren wie Videokameras in einem erfindungsgemäßen Verfahren bzw. Messsystem eingesetzt, so können die Bildsensoren der 3D-Submesssysteme einmalig geometrisch (extrinsisch) zueinander kalibriert werden und anhand der ermittelten geometrischen Transformationsdaten dementsprechend die resultierenden, getrennt aufgenommenen 3D-Messdaten je Messsystem-Pose direkt in ein gemeinsames Koordinatensystem überführt werden.

Gemäß einer weiteren vorteilhaften Ausführungsvariante eines erfindungsgemäßen Verfahrens kann vorgesehen sein,
- dass vorab Informationen über das zu erfassende Objekt bereitgestellt werden, wobei die Informationen umfassen:
   - die 3D-Geometrie und Oberflächentopographie des zu erfassenden Objekts, insbesondere in Form eines Modells, vorzugweise eines CAD-Modells, des zu erfassenden Objekts, und/oder
   - eine Beschreibung der Oberflächenreflexionseigenschaften des zu erfassenden Objekts, und/oder
   - eine Simulation und Klassifizierung von
      - Posen des Messsystems und des zu erfassenden Objekts relativ zueinander, und/oder
      - möglicher Ansteuerungen von Beleuchtungseinheiten zur Abgabe von Licht, und/oder
      - möglicher Ansteuerungen des zumindest einen Lichtmusterprojektors zur Projektion eines gerichteten Zufallsbilds, und
- dass basierend auf den bereitgestellten Informationen
   - die optimalen Posen des Messsystems und des zu erfassenden Objekts relativ zueinander, und/oder
   - die optimale Ansteuerung der Beleuchtungseinheiten zur Abgabe von Licht zur Aufnahme des zu erfassenden Objekts, und/oder
   - die optimale Ansteuerung des zumindest einen Lichtmusterprojektors zur Projektion eines gerichteten Zufallsbilds zur Aufnahme des zu erfassenden Objekts gewählt werden.

Durch die Bereitstellung von Informationen über das zu erfassende Objekt können Bereiche der Objektoberfläche vorab identifiziert werden, die in gewissen Posen des zu erfassenden Objekts relativ zum Messsystem und/oder bei Beleuchtung durch bestimmte Beleuchtungseinheiten und/oder bei Projektion von Lichtmustern durch einen oder mehrere Lichtmusterprojektoren nicht ausgeleuchtet bzw. nicht vollständig erfasst werden können und Posen bzw. Ansteuerungsvarianten für die Beleuchtungseinheiten und/oder den zumindest einen Lichtmusterprojektor gewählt werden, um diese identifizierten Bereiche richtig und vollständig erfassen zu können.

Aufgabe der Erfindung ist es weiters, ein Messsystem zur Erstellung von 3D-Punktewolken von Oberflächen von Messobjekten mit komplizierten Topografien und/oder schwierigen Oberflächeneigenschaften für die 3D-Oberflächenrekonstuktion zum Einsatz zu bringen, das bei vergleichsweise geringem Zeitaufwand eine qualitativ optimierte Erstellung von 3D-Punktewolken von Messobjektoberflächen ermöglicht.

Die Erfindung löst diese Aufgabe mit einem Messsystem zur Erzeugung von, insbesondere metrisch skalierten, 3D-Punktewolken gemäß Patentanspruch 11. Erfindungsgemäß ist dabei vorgesehen, dass das Messsystem Folgendes umfasst:
- zumindest einen Bildsensor, insbesondere zumindest einen Videosensor,
- zumindest drei Beleuchtungseinheiten in Form von Punktlichtquellen zur Abgabe von, insbesondere multispektralem, Licht auf ein zu erfassendes Objekt im Aufnahmebereich des zumindest einen Bildsensors,
   - wobei der zumindest eine Bildsensor und die Beleuchtungseinheiten zueinander bewegungs- und drehungsstarr angeordnet sind,
- zumindest einen Lichtmusterprojektor zur Projektion eines gerichteten Zufallsbilds auf ein zu erfassendes Objekt im Aufnahmebereich des zumindest einen Bildsensors,
   - wobei der zumindest eine Bildsensor und der zumindest eine Lichtmusterprojektor zueinander bewegungs- und drehungsstarr angeordnet sind, und
- eine Steuer- und Verarbeitungseinheit,
   - wobei die Steuer- und Verarbeitungseinheit mit den Beleuchtungseinheiten und dem zumindest einen Lichtmusterprojektor verbunden ist und mit dem zumindest einen Bildsensor in Datenkommunikation steht und dazu ausgebildet ist,
      - die Beleuchtungseinheiten aufeinanderfolgend, insbesondere einzeln und/oder aggregiert, zur Abgabe von Licht anzusteuern,
      - den zumindest einen Lichtmusterprojektor zur Projektion eines gerichteten Zufallsbilds anzusteuern,
      - den zumindest einen Bildsensor anzusteuern, jeweils für die Erstellung zumindest einer photogrammetrischen Aufnahme in Form einer metrisch skalierten 3D-Punktewolke, eine Sequenz von zumindest drei Aufnahmen zu erstellen,
         - wobei die zumindest drei Aufnahmen unter Beleuchtung durch jeweils verschiedene Beleuchtungskombinationen erstellt werden, und
         - wobei eine Beleuchtungskombination einer Beleuchtung durch verschiedene Beleuchtungseinheiten, die aufeinanderfolgend, insbesondere einzeln oder aggregiert, aktiviert werden und sich zumindest in ihrer Position , insbesondere ihrer Pose, bezüglich des zumindest einen Bildsensors unterscheiden, entspricht und
      - zumindest eine photometrische Aufnahme in Form einer 3D-Punktewolke aus der Sequenz der zumindest drei vom Bildsensor unter Beleuchtung durch jeweils verschiedene Beleuchtungskombinationen erstellten Aufnahmen zu erstellen.

Mit einem erfindungsgemäßen Messsystem lassen sich vorteilhafterweise alle bereits eingangs im Zusammenhang mit einem erfindungsgemäßen Verfahren erwähnten Vorteile erzielen, sowie ein erfindungsgemäßes Verfahren durchführen. Darüber hinaus kann für eine gegebene Messobjekttopografie/ein gegebenes Messobjekt sowie gemäß den jeweiligen Anforderungen an die Messgenauigkeit die jeweilige geometrische Konfiguration des Messsystems optimal ausgelegt und aufgebaut werden, wobei das Messverfahren dabei unverändert bleibt.

Mit einem erfindungsgemäßen Messsystem können bei jeder einzelnen Messsystem-Pose die zur Verfügung stehenden und in ihrer Position und Orientierung bezüglich der 3D-Messvorrichtung bekannten Beleuchtungseinheiten und ein oder mehrere Lichtmusterprojektoren entweder sequenziell, nach dem Zufallsprinzip, in Teilmengen oder einzeln aktiviert und deaktiviert werden. Auf diese Weise ist es vorteilhaft möglich, bezüglich der 3D-Messobjektgeometrie und Oberflächentopografie, der Oberflächenreflexionseigenschaften des zu erfassenden Objektes, sowie der angestrebten Messgenauigkeit der 3D-Oberflächenmodellierung die besten und sinnvollsten Beleuchtungs- bzw. Projektions-Kombinationen zu aktivieren und so gezielt nur ausgewählte Beleuchtungseinheiten und Lichtmusterprojektoren des Messsystems zu nutzen. Dies wirkt sich positiv auf die benötigte Erfassungs- und Verarbeitungszeit aus.

Gemäß einer weiteren vorteilhaften Ausführungsvariante eines erfindungsgemäßen Messsystems kann vorgesehen sein, dass die Steuer- und Verarbeitungseinheit dazu ausgebildet ist,
- vorab eine photometrische Kalibration des Bildsensors und der Beleuchtungseinheiten mit einem Kalibrationsobjekt vorzunehmen, wobei bei der Kalibration des photometrischen Systems die Oberflächennormalen des aufgenommenen Kalibrationsobjekts geschätzt werden,
- eine metrische Skalierung der unter Verwendung des zumindest einen Bildsensors und der Beleuchtungseinheiten ermittelten photometrischen Aufnahmen anhand der unter Verwendung des zumindest einen Bildsensors und des zumindest einen Lichtmusterprojektors erstellten photogrammetrischen Aufnahmen vorzunehmen und
- die erstellten photometrischen und photogrammetrischen Aufnahmen derart in eine gemeinsame und metrisch skalierte 3D-Punktewolke zusammenzuführen.

Bei dieser Ausgestaltungsvariante eines erfindungsgemäßen Messsystems können vorteilhafterweise alle weiter oben im Zusammenhang mit einem erfindungsgemäßen Verfahren mit photometrischer Kalibration genannten Vorteile genutzt werden.

Gemäß einer weiteren vorteilhaften Ausführungsvariante eines erfindungsgemäßen Messsystems kann vorgesehen sein, dass die Steuer- und Verarbeitungseinheit dazu ausgebildet ist, ein erfindungsgemäßes Verfahren durchzuführen.

Gemäß einer weiteren vorteilhaften Ausführungsvariante eines erfindungsgemäßen Messsystems, mit dem eine besonders große Anzahl an Posen bzw. Orientierungen und/oder Positionen des Messsystems und des zu erfassenden Objekts relativ zueinander realisiert werden können, kann vorgesehen sein,
- dass ein Aktuator vorgesehen ist, wobei das Messsystem und/oder das zu erfassende Objekt an dem Aktuator anordenbar sind, wobei mittels des Aktuators das Messsystem und das zu erfassende Objekt in mehreren Posen relativ zueinander positionierbar sind, und
- dass die Steuereinheit dazu ausgebildet ist,
   - den zumindest einen Bildsensor anzusteuern,
      - in jeder Pose, insbesondere in jeder Orientierung und/oder Position, jeweils zumindest eine photogrammetrische Aufnahme in Form einer 3D-Punktewolke pro Projektion eines Zufallsbilds durch den jeweiligen Lichtmusterprojektor zu erstellen, und
      - in jeder Pose, insbesondere in jeder Orientierung und/oder Position, jeweils für die Erstellung zumindest einer photogrammetrischen Aufnahme in Form einer 3D-Punktewolke eine Sequenz von zumindest drei Aufnahmen zu erstellen,
         - wobei die zumindest drei Aufnahmen unter Beleuchtung durch jeweils verschiedene Beleuchtungskombinationen erstellt werden, und
         - wobei eine Beleuchtungskombination einer Beleuchtung durch verschiedene Beleuchtungseinheiten, die aufeinanderfolgend, insbesondere einzeln oder aggregiert, aktiviert werden und sich zumindest in ihrer Position , insbesondere ihrer Pose, bezüglich des zumindest einen Bildsensors unterscheiden, entspricht,
   - zumindest eine photometrische Aufnahme in Form einer 3D-Punktewolke aus der Sequenz der zumindest drei vom Bildsensor unter Beleuchtung durch jeweils verschiedene Beleuchtungskombinationen erstellten Aufnahmen zu erstellen und
   - die in den einzelnen Posen erstellten photometrischen Aufnahmen und die in den einzelnen Posen erstellten photogrammetrischen Aufnahmen in eine gemeinsame metrisch skalierte 3D-Punktewolke zusammenzuführen.

Gemäß einer weiteren vorteilhaften Ausführungsvariante eines erfindungsgemäßen Messsystems, mit dem eine besonders große Anzahl an photogrammetrischen Aufnahmen in Form von metrisch skalierten 3D-Punktewolken bzw. photometrischen Aufnahmen in Form von 3D-Punktewolken erstellt werden können, kann vorgesehen sein,
- dass das Messsystem zumindest zwei Bildsensoren umfasst, und
- dass die Steuereinheit dazu ausgebildet ist,
   - vorab eine geometrische Kalibrierung der zumindest zwei Bildsensoren zueinander durchzuführen, indem für jeden der zumindest zwei Bildsensoren jeweils eine Transformation in ein gemeinsames Koordinatensystem ermittelt wird, wobei diese Transformationen jeweils
      - einer mit einem der Bildsensoren ermittelten Position eines Messraumpunkts genau eine Position im gemeinsamen Koordinatensystem zuordnet, und
      - gegebenenfalls den jeweils mit zumindest einem anderen Bildsensor ermittelten Position desselben Messraumpunkts dieselbe Position im gemeinsamen Koordinatensystem zuordnet, und
   - die mit den einzelnen Bildsensoren erstellten photometrischen Aufnahmen und photogrammetrischen Aufnahmen unter Anwendung der ermittelten Transformationen in ein gemeinsames Koordinatensystem zu überführen und anschließend durch Skalierung anhand der geometrischen Kalibrierung in eine gemeinsame metrisch skalierte 3D-Punktewolke zusammenzuführen.

Gemäß einer besonders kompakten Ausführungsform eines erfindungsgemäßen Messsystems, mit dem gleichzeitig eine Vielzahl an Beleuchtungskombinationen realisierbar ist, kann vorgesehen sein,
- dass das Messsystem in einem Winkel zur Aufnahmerichtung des zumindest einen Bildsensors einstellbare Seitenteile umfasst, wobei auf den Seitenteilen eine Mehrzahl von Beleuchtungseinheiten angeordnet ist, und
- dass die Steuereinheit zur Erstellung von fernfeld-photometrischen Aufnahmen dazu ausgebildet ist, die Beleuchtungseinheiten eines Seitenteils gleichzeitig aggregiert zur Abgabe von Licht anzusteuern.

Gemäß einer weiteren Ausführungsform eines erfindungsgemäßen Messsystems, mit der eine besonders große Vielfalt an photogrammetrischen Aufnahmen realisierbar ist, kann vorgesehen sein,
- dass das Messsystem mehrere Lichtmusterprojektoren jeweils zur Projektion eines gerichteten Zufallsbilds auf ein zu erfassendes Objekt im Aufnahmebereich des zumindest einen Bildsensors umfasst, und
- dass die Steuereinheit dazu ausgebildet ist, die Lichtmusterprojektoren einzeln aufeinanderfolgend zur Projektion eines gerichteten Zufallsbilds anzusteuern und den zumindest einen Bildsensor zur Erstellung jeweils zumindest einer photogrammetrischen Aufnahme pro Projektion eines Zufallsbilds durch einen der Lichtmusterprojektoren anzusteuern.

Gemäß einer weiteren besonders kompakten Ausführungsvariante eines erfindungsgemäßen Messsystems kann vorgesehen sein, dass die Lichtmusterprojektoren jeweils in einem Abstand von 2 bis 20 cm und in einem Winkel von 0° bis 15° um den Bildsensor und zwischen dem zumindest einen Bildsensor und den Beleuchtungseinheiten angeordnet sind.

Gemäß einer weiteren vorteilhaften Ausführungsvariante eines erfindungsgemäßen Messsystems kann vorgesehen sein, dass ein Bandpassfilter zur Unterdrückung von Umgebungs- und/oder Fremdlicht im optischen Pfad des zumindest einen Bildsensors angeordnet ist.

Auf diese Weise kann eine Unterdrückung des ggf. die 3D-Rekonstruktionen der Messobjektoberfläche störenden Umgebungs- oder Fremdlichts erzielt werden, indem zusätzlich im optischen Pfad des Bildsensors bzw. der Bildsensoren ein mit den Durchlasslichtwellenlänge(n) der Lichtquellen der Beleuchtungseinheiten bzw. der Lichtquellen des zumindest einen Lichtmusterprojektors angepasster Bandpassfilter vorgesehen wird.

Besonders kompakt und gleichzeitig vielseitig einsetzbar mit einer Vielzahl an möglichen Beleuchtungskombinationen kann ein erfindungsgemäßes Messsystem realisiert werden, wenn das Messsystem
- einen, insbesondere flächig ausgebildeten, Zentralkörper, insbesondere mit sechseckiger Grundfläche, auf dem der zumindest eine Bildsensor und der zumindest eine Lichtmusterprojektor und gegebenenfalls eine oder mehrere Beleuchtungseinheiten angeordnet sind, umfasst und
- zumindest einen Seitenteil, insbesondere sechs an den sechs Seiten des Zentralkörpers angeordnete Seitenteile, auf denen jeweils mehreren Beleuchtungseinheiten angeordnet sind, umfasst,
wobei jeder Seitenteil, insbesondere relativ zum Zentralkörper, in seinem Winkel zur Aufnahmerichtung des zumindest einen Bildsensors verstellbar ist.

Gemäß einer weiteren vorteilhaften Ausführungsvariante eines erfindungsgemäßen Messsystems kann weiters vorgesehen sein, dass auf jedem Seitenteil ein Feld von, insbesondere zwölf, Beleuchtungseinheiten in Form von Punktlichtquellen angeordnet ist, wobei die einzelnen Beleuchtungseinheiten durch die Steuerungseinheit einzeln oder gemeinsam aggregiert schaltbar sind.

Mit einem derartig ausgestalteten Messsystem können vorteilhafterweise eine Vielzahl von Beleuchtungskombinationen realisiert und somit sowohl nahfeld- als auch fernfeld-photometrisches Stereo realisiert werden. Nahfeld-photometrisches Stereo beruht dabei auf Beleuchtung durch einzelne Beleuchtungseinheiten bzw. einzelnen Punktlichtquellen, wohingegen fernfeld-photometrisches Stereo auf der Beleuchtung durch mehrere einzelne, kollimierte Lichtquellen bzw. Beleuchtungseinheiten in aggregierter, gleichzeitig angesteuerter bzw. aktivierter Form beruht.

Weitere Vorteile und Ausgestaltungen der Erfindung ergeben sich aus der Beschreibung und den beiliegenden Zeichnungen.

Die Erfindung ist im Folgenden anhand von besonders vorteilhaften, aber nicht einschränkend zu verstehenden Ausführungsbeispielen in den Zeichnungen schematisch dargestellt und wird unter Bezugnahme auf die Zeichnungen beispielhaft beschrieben.

Im Folgenden zeigen schematisch:
Fig. 1 eine perspektivische Ansicht eines Ausführungsbeispiels eines erfindungsgemäßen Messsystems zur Erzeugung von, insbesondere metrisch skalierten, 3D-Punktewolken von unten betrachtet, und
Fig. 2 eine perspektivische Ansicht des Ausführungsbeispiels aus Fig. 1 beim Einsatz zur Inline-Inspektion von Werkstücken.

Ein erfindungsgemäßes Messsystem 100 umfasst mindestens einen Bildsensor 2, mindestens drei, ggf. multispektrale, Beleuchtungseinheiten 4 und mindestens einen Lichtmusterprojektor 3, wobei die Beleuchtungseinheiten 4 und der Lichtmusterprojektor 3 das zu erfassende Objekt im Sichtbereich des Bildsensors 2 ausleuchten.

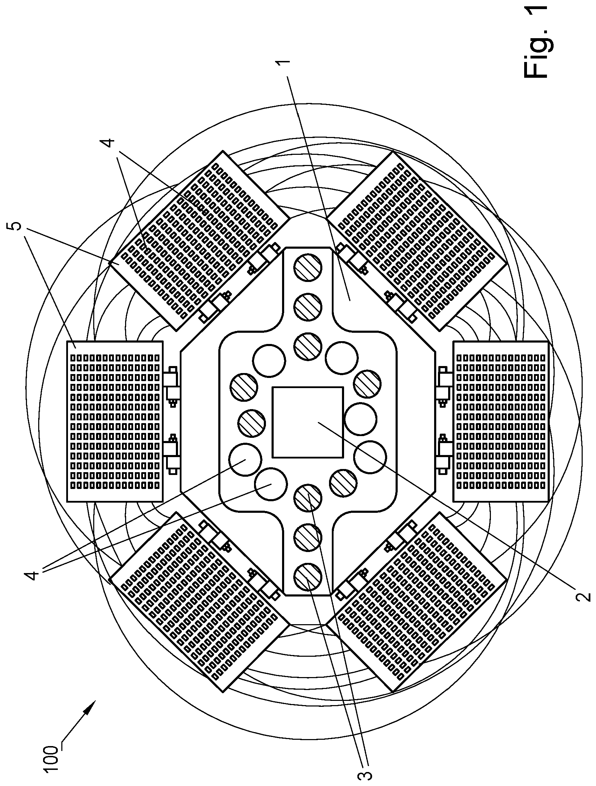

Fig. 1 zeigt ein Ausführungsbeispiel eines erfindungsgemäßen Messsystems 100. Im Ausführungsbeispiel umfasst das Messsystem 100 einen flächigen, annähernd sechseckigen Zentralkörper 1, an dem zentral ein Bildsensor 2 in Form einer Videokamera angeordnet ist, die in Fig. 1 durch ein Quadrat angedeutet ist. In einer annähernd kreisförmigen Anordnung rund um den Bildsensor 2 sind sechs Beleuchtungseinheiten 4 in Form von LED-Punktlichtquellen angeordnet, die durch Kreise angedeutet sind, sowie sechs Lichtmusterprojektoren 3, die durch schraffierte Kreise angedeutet sind. Dabei folgen im Wechsel ein bis zwei Beleuchtungseinheiten 4 auf ein bis zwei Lichtmusterprojektoren 3. In Richtung zweier einander gegenüberliegender Ecken des sechseckigen Zentralkörpers 1 sind anschließend an diejenigen Lichtmusterprojektoren 4, die der Bildsensor 2 umgeben, jeweils noch zwei weitere Lichtmusterprojektoren 4 angeordnet. Der Bildsensor 2 und die Beleuchtungseinheiten 4 sind zueinander bewegungs- und drehungsstarr angeordnet. Dasselbe gilt für den Bildsensor 2 und die Lichtmusterprojektoren 3.

An den sechs Seiten des Zentralkörpers 1 ist jeweils ein rechteckiger Seitenteil 5 angeordnet, sodass das Messsystem 100 im Ausführungsbeispiel insgesamt sechs Seitenteile 5 umfasst. An jedem der Seitenteile 5 sind in einer Art Raster mehrere Beleuchtungseinheiten 4, ebenfalls in Form von Punktlichtquellen, angeordnet sind. Die Seitenteile 5 sind im Ausführungsbeispiel mit Scharnieren mit dem Zentralkörper 1 verbunden und so in ihrem Winkel zur Aufnahmerichtung des Bildsensors 2 verstellbar.

Ein erfindungsgemäßes Messsystem 100 umfasst weiters eine, im Ausführungsbeispiel nicht dargestellte, Steuer- und Verarbeitungseinheit, die mit den Beleuchtungseinheiten 4, den Lichtmusterprojektoren 3 und dem Bildsensor 2 verbunden ist bzw. in Datenkommunikation steht.

Die Steuer- und Verarbeitungseinheit steuert die Beleuchtungseinheiten 4 an, aufeinanderfolgend einzeln oder aggregiert Licht abzugeben. Dabei können Beleuchtungseinheiten 4 des Zentralkörpers 1 und/oder Beleuchtungseinheiten 4 der Seitenteile 5 einzeln oder aggregiert angesteuert werden. Ebenso steuert die Steuer- und Verarbeitungseinheit die Lichtmusterprojektoren 3 dazu an, ein Lichtmuster in Form eines gerichteten Zufallsbilds abzugeben.

Durch eine Vielzahl realisierbarer Beleuchtungskombinationen kann mit einem erfindungsgemäßen Messsystem 100 sowohl die Konfiguration nahfeld- als auch fernfeld-photometrisches Stereo realisiert werden. Nahfeld-photometrisches Stereo beruht dabei auf der Modellierung der Beleuchtung bestehend aus einzelnen Punktlichtquellen, wohingegen fernfeld-photometrisches Stereo auf der Modellierung der Beleuchtung aus mehreren einzelnen, kollimierten Lichtquellen beruht.

Demgemäß kann die jeweils bestmögliche Beleuchtungskonfiguration bei einer gegebenen Messsystem-Pose gewählt werden, abhängig von der jeweiligen Messobjekt-Geometrie und -Oberflächentopografie und den Oberflächeneigenschaften des zu erfassenden Objekts. Die Intensität und die emittierte Lichtwellenlänge der Beleuchtungseinheiten 4, sowohl für die photometrische Erfassung der Messobjektoberfläche als auch für die photogrammetrische Vermessung mittels der Lichtmusterprojektoren 3, kann spezifisch an die Oberflächeneigenschaften des zu erfassenden Objekts angepasst und entsprechend eingestellt werden.

Umgekehrt können für eine gegebene Konfiguration eines erfindungsgemäßen Messsystems 100 die optimalen Messsystem-Posen und/oder Objektposen bestimmt werden, um das zu erfassende Objekt gemäß vorgegebener Gütekriterien wie z.B. maximale Abdeckung des Objekts, minimale Wegstrecke des gesamten Messpfades für alle Messposen, minimale Messzeit, etc. optimal zu erfassen.

Dies kann beispielsweise mittels mechanischer/robotischer Systeme erfolgen, welche das Messsystem 100 und/oder das zu erfassende Objekt im Raum bewegen. Namentlich kann sowohl die Konfiguration des Messsystems 100 bzw. eines erfindungsgemäßen Verfahrens anhand der vorab bekannten Konfigurationsmöglichkeiten des eingesetzten Messsystems 100, welche mit einem oder mehreren ggf. zusätzlich eingesetzten mechanischen Aktuator/en (z.B. Roboterarm/en) die möglichen Messsystem- und/oder Objekt-Posen realisiert werden, als auch die eigentliche 3D-Rekonstruktion der Messobjektoberfläche, vollautomatisch erfolgen (siehe hierzu beispielsweise Vanessa Staderini, Tobias Glück, Philipp Schneider, Roberto Mecca, Andreas Kugi: 'Surface sampling for optimal viewpoint generation', 2023, IEEE 13th International Conference on Pattern Recognition Systems, ICPRS, doi:10.1109/ICPRS58416.2023.10179043)*.*

Die für ein Einsatzgebiet gewählte Konfiguration des Messsystems 100 kann dabei entweder teilweise oder vollständig a pirori Informationen zugrunde liegen, welche bei einem bekannten zu erfassenden 3D-Objekt, beispielsweise die 3D-Geometrie und Oberflächentopografie, z.B. vorliegend als CAD-Modell, eine Beschreibung der Oberflächenreflexionseigenschaften, oder eine Simulation und Auswertung aller möglichen und sinnvollen Messsystemkonfigurationen und -posen, welche bezüglich spezifischer Gütekriterien optimiert werden, beinhalten.

D.h., es werden also vorab Informationen wie ein CAD-Modell des zu erfassenden Objekts über das zu erfassende Objekt bereitgestellt, auf deren Grundlage die optimalen Posen des Messsystems 100 und des zu erfassenden Objekts relativ zueinander, sowie die optimalen Ansteuerungen von Beleuchtungseinheiten 4 bzw. der Lichtmusterprojektoren 3 zur Erfassung bzw. Aufnahme des zu erfassenden Objekts, ausgewählt werden können.

Im gezeigten Ausführungsbeispiel ist das Messsystem 100 an einem nicht dargestellten Aktuator angeordnet, der das Messsystem 100 in mehreren verschiedenen Posen, d.h. in mehreren verschiedenen Orientierungen und/oder Positionen, relativ zu einem zu vermessenden Objekt, positioniert, wobei auf der Messobjektoberfläche der Beobachtungsbereich des Bildsensors 2 die Beleuchtungsbereiche von mindestens drei Beleuchtungseinheiten 4 und den Bereich einer Lichtmusterprojektion teilweise oder vollständig abdeckt.

Alternativ dazu kann auch das zu erfassende Objekt von einem Aktuator relativ zum Messsystem 100 in verschiedene Posen bewegt werden, oder es ist auch möglich, dass sowohl das Messsystem 100, als auch das zu erfassende Objekt an einem Aktuator angeordnet sind und relativ zueinander bewegt werden.

Zur Erstellung von fernfeld-photometrischen Aufnahmen kann die Steuer- und Verarbeitungseinheit die Beleuchtungseinheiten 4 z.B. eines Seitenteils 5 ansteuern, gleichzeitig aggregiert Licht abzugeben. Zur Erstellung nahfeld-photometrischer Aufnahmen kann die Steuer- und Verarbeitungseinheit die Beleuchtungseinheiten 4 ansteuern, einzeln aufeinanderfolgend in einer Sequenz Licht abzugeben.

Mit einem erfindungsgemäßen Messsystem 100 sind eine, zwei oder mehrere photogrammetrische Stereobasen mittels des Einsatzes von zwei oder mehreren Lichtmusterprojektoren 3 bezüglich des Bildsensors 2 realisierbar, um so z.B. optimal auf unterschiedliche Material- und Oberflächeneigenschaften, Messobjekt-Geometrien und Oberflächentopografien, sowie angestrebte und erforderliche 3D-Messgenauigkeiten bei einer jeweiligen Messsystem-Pose realisieren zu können. Die einzelnen Lichtmusterprojektoren 3 werfen ein über die Zeit unveränderliches Projektionsmuster auf einen Teilbereich oder die gesamte Messobjektoberfläche.

Es kann nur eine einzige Projektionsmustervariante, aber auch für individuelle oder für alle Lichtmusterprojektoren 3 je eine spezifische Projektionsmustervariante eingesetzt werden. Die jeweiligen Projektionsmusterstrukturen werden so gewählt, dass das optische Auflösungsvermögen der Lichtmusterprojektoren 3 auf das optische Auflösungsvermögen des Bildsensors 2, als auch auf die jeweilige Messobjekt-Oberflächentopografie und Oberflächenbeschaffenheit/-rauheit möglichst optimal abgestimmt ist.

Mit einem erfindungsgemäßen Messsystem 100 und einem, weiter unten noch näher beschriebenen erfindungsgemäßen Verfahren, können also vorteilhafterweise die beiden 3D-Messprinzipien photometrisches Stereo und photogrammetrisches Stereo kombiniert werden. Dies ermöglicht es im Ausführungsbeispiel, je räumlicher Lage oder Pose des Messsystems 100, d.h. je Messsystem-Pose, auch bei schwierig zu vermessenden Messobjektoberflächen bildbasiert, im Ausführungsbeispiel videobildbasiert, eine dichte, metrisch skalierte 3D-Punktewolke der Messobjektoberfläche zu erstellen. Ein erfindungsgemäßes Messsystem 100 vereint somit gewissermaßen die (video)bildbasierten, berührungslosen 3D-Oberflächenrekonstuktionsverfahren nah-/fernfeld-photometrisches Stereo (NFPS) und mehrprojektor/mehrkamera-photogrammetrisches Stereo (MPKS) in einem neuartigen NFPS-MPKS 3D-Messsystem.

Auf diese Weise können Oberflächen von Materialien mit komplexen Reflektanzeigenschaften wie hoch-reflektierende Oberflächen mittels photometrischem Stereo und gleichzeitig nicht-spiegelnde sowie schwach reflektierende Messobjektoberflächen mit Hilfe der Methode des photogrammetrischen Stereos rekonstruiert werden.

Da ein Bildsensor 2 jeweils gemeinsam für die Erstellung von photogrammetrischen Aufnahmen und photometrischen Aufnahmen eingesetzt wird, befinden sich die aus den beiden Messverfahren photometrisches Stereo und photogrammetrisches Stereo je Messsystem-Pose abgeleiteten 3D-Messdaten bzw. 3D-Punktewolken inhärent, d.h. ohne zusätzliche Kalibrierung/Transformation im selben Koordinatensystem, sofern das optische Zentrum des Bildsensors 2 als Ursprung der Koordinatensysteme für die 3D-Messdaten aus den beiden Messverfahren angenommen wird.

Optional ist es auch möglich, zwei oder mehr Bildsensoren 2 in einem erfindungsgemäßen Messsystem 100 einzusetzen, wobei die Bildsensoren 2 der 3D-Submesssysteme dann einmalig geometrisch (extrinsisch) zueinander kalibriert werden und anhand der ermittelten geometrischen Transformationsdaten dementsprechend die resultierenden, getrennt aufgenommenen 3D-Messdaten bzw. 3D-Punktewolken direkt in ein gemeinsames Koordinatensystem überführt werden.

Zur Unterdrückung des ggf. die 3D-Rekonstruktionen der Oberfläche des zu erfassenden Objekts störenden Umgebungs- oder Fremdlichts kann zusätzlich im optischen Pfad des bzw. jedes Bildsensors 2 ein mit den Durchlasslichtwellenlänge(n) der Beleuchtungs- und Projektor-Lichtquellen angepasster Bandpassfilter angeordnet werden.

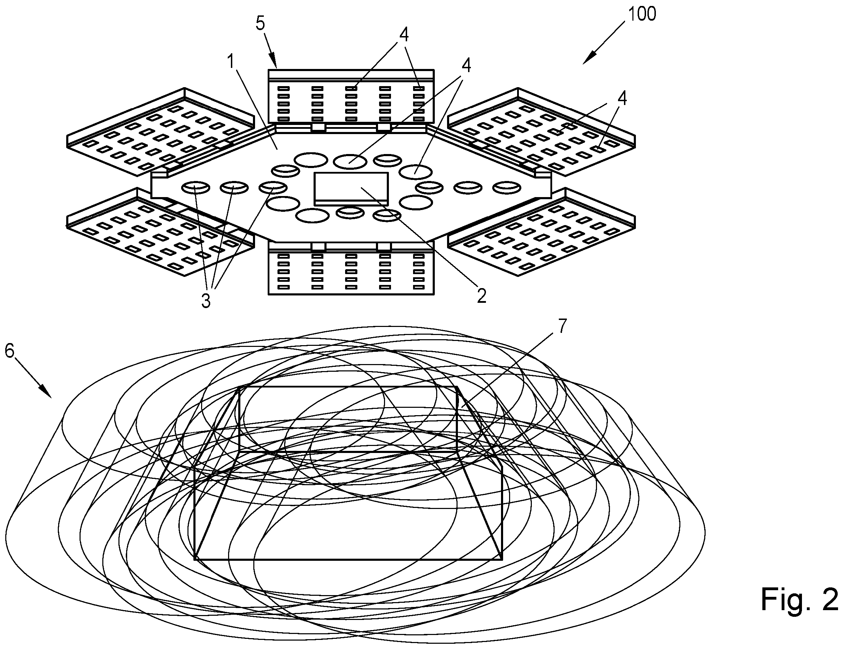

Fig. 2 zeigt ein Ausführungsbeispiel, bei dem das Messsystem 100 aus Fig. 1 zur Inline-Inspektion von Werkstücken zum Einsatz kommt. Eine solche Inline-Inspektion kann zum Beispiel bei der Druckguss- oder Spritzguss-Produktion Einsatz finden. Das Messsystem 100 ist dabei über einem Förderband 6 angeordnet, auf dem Werkstücke durch den Aufnahmebereich des Bildsensors 2 bzw. den Beleuchtungsbereich der Beleuchtungseinheiten 4 und der Lichtmusterprojektoren 3 transportiert werden. Bei den Werkstücken handelt es sich in Fig. 2 um Aluminium-Druckguss-Teile, die einer Qualitätsinspektion unterzogen werden sollen.

Der pyramidenstumpfförmige Erfassungsbereich 7 in Fig. 2 kennzeichnet den optimal vom Bildsensor 2 aufnehmbaren bzw. von den Beleuchtungseinheiten 4 und dem Lichtmusterprojektoren 3 ausleuchtbaren Bereich, durch den die Werkstücke für die Inspektion transportiert werden. Die den Bereich 7 umgebenden Linien bzw. Kreise in Fig. 1 zeigen dabei den von den Beleuchtungseinheiten 4 bzw. den Lichtmusterprojektoren 3 prinzipiell ausleuchtbaren Bereich. Die Dimensionen des optimalen, pyramidenstumpfförmigen Erfassungsbereichs 7 liegen im Ausführungsbeispiel am fernen Ende des Erfassungsbereiches im Bereich eines Rechtecks mit 12 bis 16 cm Seitenlänge.

Wie bereits zuvor erwähnt, werden beim Messsystem 100 in Fig. 2 bei jeder einzelnen Messsystem-Pose, die durch den Aktuator eingestellt wird, an dem das Messsystem 100 angeordnet ist, die zur Verfügung stehenden und in ihrer Position und Orientierung an dem Messsystem 100 bekannten Beleuchtungseinheiten 4 und Lichtmusterprojektoren 3 entweder sequenziell, nach dem Zufallsprinzip, aggregiert in Teilmengen oder einzeln aktiviert und deaktiviert. Dies erfolgt basierend auf einem CAD-Modell des zu erfassenden Werkstücks, das vorab zur Verfügung stand und Informationen darüber liefert, welche Bereiche der Oberfläche des Werkstücks bei welchen Konfigurationen nicht einsichtig sind.

Auf diese Weise können bereits vorab bezüglich der 3D-Messobjekt-Geometrie und - Oberflächentopografie, den Oberflächenreflexionseigenschaften des Messobjekts bzw. des zu erfassenden Objekts, sowie der angestrebten Messgenauigkeit der 3D-Oberflächenmodellierung die besten und sinnvollsten Kombinationen der Beleuchtungseinheiten 4 bzw. der Lichtmusterprojektoren 3 des Messsystems 100 aktiviert und so selektiv und gezielt genutzt werden, was Zeit und Rechenleistung spart. Hinsichtlich räumlicher Auflösung und Genauigkeit können so der Abstand zwischen Lichtmusterprojektor 3 und zu erfassendem Objekt, sowie zwischen den aktivierten Beleuchtungseinheiten 4 und zu erfassendem Objekt optimal gewählt werden. Hinsichtlich optischer Auflösung kann auch vorab für das jeweilige Einsatzgebiet ein Bildsensor 2 mit optimaler Blendenzahl, Brennweite und Pixelzahl für das Messsystem 100 gewählt werden.

Im Ausführungsbeispiel können mit dem Bildsensor 2 240 Aufnahmen pro Sekunde erstellt werden, sodass die Belichtungszeit also 1/240 s beträgt. Die Anzahl an möglichen Aufnahmen pro Sekunde wird durch die Bauteileigenschaften der Beleuchtungseinheiten 4 bzw. der Lichtquellen der Lichtmusterprojektoren 3 limitiert. Im Ausführungsbeispiel werden weißes Licht emittierende Leuchtdioden (LED) verwendet. Für eine Qualitätsinspektion des Aluminium-Druckguss-Werkstücks in Fig. 2 ist eine Aufnahmezeit von 1 Sekunde pro Position bzw. Orientierung problemlos möglich. Je nach Einsatzgebiet können beim Inline-Einsatz in der Produktion Aufnahmezeiten von bis zu 30 Sekunden oder mehr möglich sein.

Während sich das Werkstück durch den Erfassungsbereich 7 bewegt und die Beleuchtungseinheiten 4 und/oder die Lichtmusterprojektoren 3 Licht bzw. Lichtmuster auf die Oberfläche des Werkstücks abgeben, steuert die Steuer- und Verarbeitungseinheit den Bildsensor 2 an, einerseits jeweils photogrammetrische Aufnahmen in Form von metrisch skalierten 3D-Punktewolken pro Projektion eines Zufallsbilds durch einen oder mehrere der Lichtmusterprojektoren 3 zu erstellen.

Andererseits steuert die Steuer- und Verarbeitungseinheit den Bildsensor 2 an, jeweils photometrische Aufnahmen bei Beleuchtung durch verschiedene, aufeinanderfolgend aktivierte Beleuchtungseinheiten 4 zu machen, um daraus die 3D-Punktewolken zu erstellen. Dabei wird eine 3D-Punktewolke aus einer Sequenz von zumindest drei Aufnahmen erstellt, wobei die Beleuchtungseinheiten 4 während der Erstellung der Aufnahmen einzeln oder aggregiert aktiviert werden und die aktivierten Beleuchtungseinheiten 4 sich in ihrer Orientierung und/oder Position unterscheiden, d.h. ihrer Pose bezüglich des Bildsensors 2.

In jeder Pose des Messsystems 100 werden im Ausführungsbeispiel also zeitlich sequenziert Teilmengen von eingeschalteten Lichtmusterprojektoren 3 und Beleuchtungseinheiten 4 einzeln oder aggregiert in beliebiger Kombination von dem Bildsensor 2 als Bildsequenzen erfasst und algorithmisch weiterverarbeitet.

Da, wie bereits eingangs erwähnt, die erstellten photometrischen Aufnahmen in Form von 3D-Punktewolken zunächst nicht metrisch skaliert zu den realen Dimensionen des zu erfassenden Objekts vorliegen, wird im Ausführungsbeispiel vorab eine photometrische Kalibration des Bildsensors 2 und der Beleuchtungseinheiten 4 mit einem Kalibrationsobjekt vorgenommen. Bei dieser Kalibration des photometrischen Systems, also des Bildsensors 2 und der Beleuchtungseinheiten 4, werden die Oberflächennormalen des aufgenommenen Kalibrationsobjekts geschätzt und eine metrische Skalierung der unter Verwendung der erstellten photogrammetrischen Aufnahmen errechneten photometrischen Daten vorgenommen, sodass die erstellten photometrischen Aufnahmen und die erstellten photogrammetrischen Aufnahmen in eine gemeinsame metrisch skalierte 3D-Punktewolke zusammengeführt werden können.

Zusätzlich zur metrisch skalierten 3D-Punktewolke können optional auch noch gemessene Objekteigenschaften des zu erfassenden Objekts wie z.B. Albedo, Reflektanzeigenschaften, Textur, Rauheit, etc. bereitgestellt werden.

Das photometrische System wird im Ausführungsbeispiel einmalig mit einem Kalibrierobjekt kalibriert, das einen Lambertsch reflektierenden Hintergrund (https://de.wikipedia.org/wiki/Lambertsches_Gesetz, zuletzt aufgerufen am 28. Juni 2024) wie z.B. einer Papieroberfläche aufweist, sowie eine geeignete Anzahl von hochreflektierenden und sphärischen/kugelförmigen Objekten (z.B. Metallkugeln) umfasst, die auf den Lambertsch reflektierenden Hintergrund montiert sind. Das Ergebnis der Kalibrierung des photometrischen Systems mit diesem Kalibrierobjekt sind die Lichtrichtungsnormalen bzw. Oberflächennormalen für alle zur Verfügung stehenden Lichtrichtungen des jeweiligen (photometrischen) Beleuchtungsaufbaus.

Mit Hilfe dieses Kalibrierungssystems werden im Ausführungsbeispiel die Lichtrichtungsnormalen, je nach Bewegung des Bildsensors 2 und basierend auf einer optimierten Pose des Messsystems 100, angepasst. Diese optimierte Pose beruht sowohl auf den Transformationsdaten des Aktuators bzw. des zu erfassenden Objekts als auch auf der Positionskorrektur durch das CAD-Modell des zu erfassenden Objekts. Die Positionskorrektur co-registriert die 3D-Daten, welche von der neuen Position aus gewonnen werden, mit dem CAD-Modell. Die finalen 3D-Oberflächendaten, d.h. die finale gemeinsame, metrisch skalierte 3D-Punktewolke wird abschließend mit dem CAD-Modell abgeglichen, um so Fehler am erfassten Objekt bzw. Werkstück zu ermitteln und fehlerhafte Teile indentifizieren und u.U. ausscheiden zu können.

Die Kalibrierung des photometrischen Systems und des photogrammetrischen Systems zueinander erfolgt durch die lokale Fusion von Tiefenbildern mit Hilfe der Oberflächenorientierung, welche dank der Gestaltung des Messsystems 100 mit demselben Bildsensor 2 aufgenommen werden. Hier wird ausgenutzt, dass bei derselben Sensorposition die korrespondierenden Bildpunkte lokal jeweils auf denselben Sensorpixel abgebildet werden.

Die Zusammenführung von photometrischen und photogrammetrischen Aufnahmen erfolgt über eine Fusion der Tiefe des photogrammetrischen Stereos, welche absolut (und nicht nur relativ) korrekt ist, und der Oberflächennormalen von photometrischem Stereo, welche relativ korrekt sind (siehe z.B. Beschreibung für photometrisches Stereo und Lichtfeld in: *Doris Antensteiner, Svorad Štolc, Thomas Pock: 'A review of depth and normal fusion algorithms', 2018, Sensors 18(2):431, doi:10.3390*/*s18020431).*

Hierfür wird die Tiefe aus photogrammetrischem Stereo mittels einer Optimierungsfunktion verbessert, indem die lokalen Oberflächennormalen gewichtet angepasst werden. Dies erfolgt speziell in den Bereichen, in denen die Konfidenz der Tiefenbereiche niedrig ist, und/oder wenig Tiefeninformation vorhanden ist. Die daraus resultierenden, verfeinert texturierten Tiefenpunktewolken werden in einem globalen Multi-Punktewolke Matching Verfahren miteinander kombiniert. Hierfür werden die Punktewolken geometrisch im Raum transformiert. Diese Transformation besteht aus einer initialen Transformation und einem Verfeinerungsschritt: Die initiale Transformation entsteht basierend auf dem Vorwissen über die Posen des Aktuators bzw. des zu erfassenden Objekts, wobei die Verfeinerung in einem globalen Optimierungsschritt über alle Teilpunktewolken durchgeführt wird.

Bestehen 3D-Datenlöcher in einem der Ursprungsdatensätze (Tiefenbilder oder Oberflächennormalen), werden an dieser Stelle Daten mit einer erhöhten Konfidenz von jener Quelle übernommen, wo Daten vorhanden sind. Fehlt beispielsweise Photometrieinformation von photometrischem Stereo, die Tiefe von photogrammetrischem Stereo ist jedoch vorhanden, wird die Konfidenz dieser Stelle im Bilddatensatz von photometrischem Stereo schwächer gewichtet. Dadurch werden fehlende Daten allein aus vorhandenen Dateninformationen gefüllt und extrapoliert. Weiters werden Texturinformationen als Vorwissen für die Gewichtungsterme miteinbezogen.

Das photometrische Stereo kann weiters dazu benutzt werden, um die resultierende Reflektanzfunktion der jeweiligen Messobjektoberfläche genauer zu bestimmen. Dies kann bei denselben oder ähnlichen Objekten entweder einmalig, oder bei unterschiedlichen Objekten, vor jeder Oberflächenmodellierung durch das Ausmessen der Reflektanzfunktion der jeweiligen Messobjektoberfläche erfolgen. Die Reflektanzfunktion kann sowohl zur Materialbestimmung als auch zur Optimierung der Schätzung der Oberflächennormalen herangezogen werden. Die Reflektanzeigenschaften der Messobjektoberfläche kann zum Beispiel punktweise mit einer bidirektionalen Reflektanzverteilungsfunktion (BRDF, bidirectional reflectance distribution function) (doi:10.1109/ICPR.2014.357, zuletzt aufgerufen am 28. Juni 2024) oder regional abhängig zum Beispiel mit einer bidirektionalen Texturierungsfunktion (BTF, bidirectional texturing function) beschrieben werden (doi:10.1007/s00371-018-1545-3, zuletzt aufgerufen am 28. Juni 2024).

## Patentansprüche

1. Verfahren zur Erstellung, insbesondere metrisch skalierter, 3D-Punktewolken, insbesondere dreidimensionaler (3D)-Oberflächenrekonstruktionen von Objekten, mit einem Messsystem umfassend
- zumindest einen Bildsensor (2), insbesondere einen Videosensor,
- zumindest drei Beleuchtungseinheiten (4) in Form von Punktlichtquellen zur Abgabe von, insbesondere multispektralem, Licht auf ein zu erfassendes Objekt im Aufnahmebereich des zumindest einen Bildsensors (2),
- zumindest einen Lichtmusterprojektor (3) zur Projektion eines gerichteten Zufallsbilds auf ein zu erfassendes Objekt im Aufnahmebereich des zumindest einen Bildsensors (2),
- wobei die Beleuchtungseinheiten (4) aufeinanderfolgend zur Abgabe von Licht angesteuert werden, und/oder der zumindest eine Lichtmusterprojektor (3) zur Projektion eines gerichteten Zufallsbilds angesteuert wird,
- wobei von dem zumindest einen Bildsensor (2) jeweils zumindest eine photogrammetrische Aufnahme in Form einer metrisch skalierten 3D-Punktewolke pro Projektion eines Zufallsbilds durch den zumindest einen Lichtmusterprojektor (3) erstellt wird, und
- wobei jeweils zumindest eine photometrische Aufnahme in Form einer 3D-Punktewolke aus einer Sequenz von zumindest drei Aufnahmen des zumindest einen Bildsensors (2) erstellt wird,
- wobei die zumindest drei Aufnahmen unter Beleuchtung durch jeweils verschiedene Beleuchtungskombinationen erstellt werden, und
- wobei eine Beleuchtungskombination einer Beleuchtung durch verschiedene Beleuchtungseinheiten (4), die aufeinanderfolgend, insbesondere einzeln oder aggregiert, aktiviert werden und sich zumindest in ihrer Position, insbesondere ihrer Pose, bezüglich des zumindest einen Bildsensors (2) unterscheiden, entspricht.

2. Verfahren nach Anspruch 1, **dadurch gekennzeichnet,**
- **dass** vorab eine photometrische Kalibration des zumindest einen Bildsensors (2) und der Beleuchtungseinheiten (4) mit einem Kalibrationsobjekt vorgenommen wird, wobei im Rahmen der Kalibration die Oberflächennormalen des aufgenommenen Kalibrationsobjekts geschätzt werden,
- **dass** eine metrische Skalierung der unter Verwendung des zumindest einen Bildsensors (2) und der Beleuchtungseinheiten (4) ermittelten photometrischen Aufnahmen vorgenommen wird anhand der unter der Verwendung des zumindest einen Bildsensors (2) und des zumindest einen Lichtmusterprojektors (3) erstellten photogrammetrischen Aufnahmen und
- **dass** die erstellten photometrischen Aufnahmen und die erstellten photogrammetrischen Aufnahmen derart in eine gemeinsame metrisch skalierte 3D-Punktewolke zusammengeführt werden.

3. Verfahren nach Anspruch 1 oder 2, **dadurch gekennzeichnet, dass** eine lokale Optimierung zur Verbesserung der Tiefe der einzelnen Punkte der 3D-Punktewolke aus den photogrammetrischen Aufnahmen vorgenommen wird, wobei im Rahmen der Optimierung die lokalen Oberflächennormalen gewichtet angepasst werden.

4. Verfahren nach einem der vorangehenden Ansprüche, **dadurch gekennzeichnet,**
- **dass** die Beleuchtungseinheiten (4) zur Erstellung von nahfeld-photometrischen Aufnahmen einzeln aufeinanderfolgend in einer Sequenz zur Abgabe von Licht angesteuert werden, und/oder
- **dass** aufeinanderfolgend in einer Sequenz mehrere Beleuchtungseinheiten (4) aggregiert gleichzeitig zur Erstellung von fernfeld-photometrischen Aufnahmen zur Abgabe von Licht angesteuert werden.

5. Verfahren nach einem der vorangehenden Ansprüche, **dadurch gekennzeichnet,**
- **dass** das Messsystem mehrere Lichtmusterprojektoren (3) zur Projektion eines gerichteten Zufallsbilds auf ein zu erfassendes Objekt im Aufnahmebereich des zumindest einen Bildsensors (2) umfasst, und
- **dass** die Lichtmusterprojektoren (3) einzeln aufeinanderfolgend in einer Sequenz zur Projektion eines gerichteten Zufallsbilds angesteuert werden, wobei von dem zumindest einen Bildsensor (2) jeweils zumindest eine photogrammetrische Aufnahme pro Projektion eines Zufallsbilds durch einen der Lichtmusterprojektoren (3) erstellt wird.

6. Verfahren nach einem der vorangehenden Ansprüche, **dadurch gekennzeichnet,**
- **dass** das Messsystem und das zu erfassende Objekt in mehreren Posen, insbesondere in mehreren Orientierungen und/oder Positionen, relativ zueinander positioniert werden,
- **dass** in jeder Pose, insbesondere in jeder Orientierung und/oder Position, von dem zumindest einen Bildsensor (2) jeweils zumindest eine photogrammetrische Aufnahme in Form einer 3D-Punktewolke pro Projektion eines Zufallsbilds durch den jeweiligen Lichtmusterprojektor (3) erstellt wird,
- **dass** in jeder Pose, insbesondere in jeder Orientierung und/oder Position, jeweils zumindest eine photometrische Aufnahme in Form einer 3D-Punktewolke aus einer Sequenz von zumindest drei Aufnahmen des zumindest einen Bildsensors (2) erstellt wird,
- wobei die zumindest drei Aufnahmen unter Beleuchtung durch jeweils verschiedene Beleuchtungskombinationen erstellt werden, und
- wobei eine Beleuchtungskombination einer Beleuchtung durch verschiedene Beleuchtungseinheiten (4), die aufeinanderfolgend, insbesondere einzeln oder aggregiert, aktiviert werden und sich in zumindest ihrer Position, insbesondere ihrer Pose, bezüglich des zumindest einen Bildsensors (2) unterscheiden, entspricht.

7. Verfahren nach Anspruch 6, **dadurch gekennzeichnet, dass** die in den einzelnen Posen, insbesondere den einzelnen Orientierungen und/oder Positionen, erstellten photometrischen Aufnahmen und die in den einzelnen Posen erstellten photogrammetrischen Aufnahmen in eine gemeinsame und metrisch skalierte 3D-Punktewolke zusammengeführt werden.

8. Verfahren nach einem der vorangehenden Ansprüche, **dadurch gekennzeichnet, dass** für die einzelnen erstellten Aufnahmen, insbesondere in jeder Pose, gemessene Objekteigenschaften, insbesondere Albedo, Reflektanzeigenschaften, Textur, Rauheit, bereitgestellt werden.

9. Verfahren nach einem der vorangehenden Ansprüche, **dadurch gekennzeichnet,**
- **dass** das Messsystem zumindest zwei Bildsensoren (2) umfasst,
- **dass** vorab eine geometrische Kalibrierung der zumindest zwei Bildsensoren (2) zueinander durchgeführt wird, indem für jeden der zumindest zwei Bildsensoren (2) jeweils eine Transformation in ein gemeinsames Koordinatensystem ermittelt wird, wobei diese Transformationen jeweils
- einer mit einem der Bildsensoren (2) ermittelten Position eines Messraumpunkts genau eine Position im gemeinsamen Koordinatensystem zuordnet, und
- gegebenenfalls den jeweils mit zumindest einem anderen Bildsensor (2) ermittelten Position desselben Messraumpunkts dieselbe Position im gemeinsamen Koordinatensystem zuordnet, und
- **dass** die mit den einzelnen Bildsensoren (2) erstellten photometrischen Aufnahmen und die erstellten photogrammetrischen Aufnahmen unter Anwendung der ermittelten Transformationen in ein gemeinsames Koordinatensystem überführt werden und anschließend durch Skalierung anhand der ermittelten geometrischen Kalibrierung in eine gemeinsame und metrisch skalierte 3D-Punktewolke zusammengeführt werden.

10. Verfahren nach einem der vorangehenden Ansprüche, **dadurch gekennzeichnet,**
- **dass** vorab Informationen über das zu erfassende Objekt bereitgestellt werden, wobei die Informationen umfassen:
- die 3D-Geometrie und Oberflächentopographie des zu erfassenden Objekts, insbesondere in Form eines Modells, vorzugweise eines CAD-Modells, des zu erfassenden Objekts, und/oder
- eine Beschreibung der Oberflächenreflexionseigenschaften des zu erfassenden Objekts, und/oder
- eine Simulation und Klassifizierung von
- Posen des Messsystems und des zu erfassenden Objekts relativ zueinander, und/oder
- möglicher Ansteuerungen von Beleuchtungseinheiten (4) zur Abgabe von Licht, und/oder
- möglicher Ansteuerungen des zumindest einen Lichtmusterprojektors (3) zur Projektion eines gerichteten Zufallsbilds, und
- **dass** basierend auf den bereitgestellten Informationen
- die optimalen Posen des Messsystems und des zu erfassenden Objekts relativ zueinander, und/oder
- die optimale Ansteuerung der Beleuchtungseinheiten (4) zur Abgabe von Licht zur Aufnahme des zu erfassenden Objekts, und/oder
- die optimale Ansteuerung des zumindest einen Lichtmusterprojektors (3) zur Projektion eines gerichteten Zufallsbilds zur Aufnahme des zu erfassenden Objekts gewählt werden.

11. Messsystem (100) zur Erzeugung von, insbesondere metrisch skalierten, 3D-Punktewolken umfassend
- zumindest einen Bildsensor (2), insbesondere zumindest einen Videosensor,
- zumindest drei Beleuchtungseinheiten (4) in Form von Punktlichtquellen zur Abgabe von, insbesondere multispektralem, Licht auf ein zu erfassendes Objekt im Aufnahmebereich des zumindest einen Bildsensors (2),
- wobei der zumindest eine Bildsensor (2) und die Beleuchtungseinheiten (4) zueinander bewegungs- und drehungsstarr angeordnet sind,
- zumindest einen Lichtmusterprojektor (3) zur Projektion eines gerichteten Zufallsbilds auf ein zu erfassendes Objekt im Aufnahmebereich des zumindest einen Bildsensors (2),
- wobei der zumindest eine Bildsensor (2) und der zumindest eine Lichtmusterprojektor (3) zueinander bewegungs- und drehungsstarr angeordnet sind, und
- eine Steuer- und Verarbeitungseinheit,
- wobei die Steuer- und Verarbeitungseinheit mit den Beleuchtungseinheiten (4) und dem zumindest einen Lichtmusterprojektor (3) verbunden ist und mit dem zumindest einen Bildsensor (2) in Datenkommunikation steht und dazu ausgebildet ist,
- die Beleuchtungseinheiten (4) aufeinanderfolgend, insbesondere einzeln und/oder aggregiert, zur Abgabe von Licht anzusteuern,
- den zumindest einen Lichtmusterprojektor (3) zur Projektion eines gerichteten Zufallsbilds anzusteuern,
- den zumindest einen Bildsensor (2) anzusteuern, jeweils zumindest eine photogrammetrische Aufnahme in Form einer metrisch skalierten 3D-Punktewolke pro Projektion eines Zufallsbilds durch den zumindest einen Lichtmusterprojektor (3) zu erstellen, und
- den zumindest einen Bildsensor (2) anzusteuern, um jeweils für die Erstellung zumindest einer photometrischen Aufnahme in Form einer 3D-Punktewolke eine Sequenz von zumindest drei Aufnahmen zu erstellen,
- wobei die zumindest drei Aufnahmen unter Beleuchtung durch jeweils verschiedene Beleuchtungskombinationen erstellt werden, und
- wobei eine Beleuchtungskombination einer Beleuchtung durch verschiedene Beleuchtungseinheiten (4), die aufeinanderfolgend, insbesondere einzeln oder aggregiert, aktiviert werden und sich in zumindest ihrer Position, insbesondere ihrer Pose, bezüglich des zumindest einen Bildsensors (2) unterscheiden, entspricht und
- zumindest eine photometrische Aufnahme in Form einer 3D-Punktewolke aus der Sequenz der zumindest drei vom Bildsensor (2) unter Beleuchtung durch jeweils verschiedene Beleuchtungskombinationen erstellten Aufnahmen zu erstellen.

12. Messsystem (100) nach Anspruch 11, **dadurch gekennzeichnet, dass** die Steuer- und Verarbeitungseinheit dazu ausgebildet ist,
- vorab eine photometrische Kalibration des Bildsensors und der Beleuchtungseinheiten mit einem Kalibrationsobjekt vorzunehmen, wobei bei der Kalibration des photometrischen Systems die Oberflächennormalen des aufgenommenen Kalibrationsobjekts geschätzt werden,
- eine metrische Skalierung der unter Verwendung des zumindest einen Bildsensors (2) und der Beleuchtungseinheiten (4) ermittelten photometrischen Aufnahmen vorzunehmen anhand der unter der Verwendung des zumindest einen Bildsensors (2) und des zumindest einen Lichtmusterprojektors (3) erstellten photogrammetrischen Aufnahme und
- die erstellten photometrischen und photogrammetrischen Aufnahmen derart in eine gemeinsame metrisch skalierte 3D-Punktewolke zusammenzuführen.

13. Messsystem (100) nach Anspruch 11 oder 12, **dadurch gekennzeichnet, dass** die Steuer- und Verarbeitungseinheit dazu ausgebildet ist, ein Verfahren nach einem der Ansprüche 1 bis 10 durchzuführen.

14. Messsystem (100) nach einem der Ansprüche 11 bis 13, **dadurch gekennzeichnet,**
- **dass** ein Aktuator vorgesehen ist, wobei das Messsystem und/oder das zu erfassende Objekt an dem Aktuator anordenbar sind, wobei mittels des Aktuators das Messsystem und das zu erfassende Objekt in mehreren Posen, insbesondere in mehreren Orientierungen und/oder Positionen, relativ zueinander positionierbar sind, und
- **dass** die Steuereinheit dazu ausgebildet ist,
- den zumindest einen Bildsensor (2) anzusteuern,
- in jeder Pose, insbesondere in jeder Orientierung und/oder Position, jeweils zumindest eine photogrammetrische Aufnahme in Form einer 3D-Punktewolke pro Projektion eines Zufallsbilds durch den jeweiligen Lichtmusterprojektor (3) zu erstellen, und
- in jeder Pose, insbesondere in jeder Orientierung und/oder Position, jeweils für die Erstellung zumindest einer photometrischen Aufnahme in Form einer 3D-Punktewolke eine Sequenz von zumindest drei Aufnahmen zu erstellen,
- wobei die zumindest drei Aufnahmen unter Beleuchtung durch jeweils verschiedene Beleuchtungskombinationen erstellt werden, und
- wobei eine Beleuchtungskombination einer Beleuchtung durch verschiedene Beleuchtungseinheiten (4), die aufeinanderfolgend, insbesondere einzeln oder aggregiert, aktiviert werden und sich in zumindest ihrer Position, insbesondere ihrer Pose, bezüglich des zumindest einen Bildsensors (2) unterscheiden,
- zumindest eine photometrische Aufnahme in Form einer 3D-Punktewolke aus der Sequenz der zumindest drei vom Bildsensor (2) unter Beleuchtung durch jeweils verschiedene Beleuchtungskombinationen erstellten Aufnahmen zu erstellen und
- die in den einzelnen Posen erstellten photometrischen Aufnahmen und die in den einzelnen Posen erstellten photogrammetrischen Aufnahmen in eine gemeinsame metrisch skalierte 3D-Punktewolke zusammenzuführen.

15. Messsystem (100) nach einem der Ansprüche Anspruch 9 bis 12, **dadurch gekennzeichnet,**
- **dass** das Messsystem zumindest zwei Bildsensoren (2) umfasst, und
- **dass** die Steuereinheit dazu ausgebildet ist,
- vorab eine geometrische Kalibrierung der zumindest zwei Bildsensoren (2) zueinander durchzuführen, indem für jeden der zumindest zwei Bildsensoren (2) jeweils eine Transformation in ein gemeinsames Koordinatensystem ermittelt wird, wobei diese Transformationen jeweils
- einer mit einem der Bildsensoren (2) ermittelten Position eines Messraumpunkts genau eine Position im gemeinsamen Koordinatensystem zuordnet, und
- gegebenenfalls den jeweils mit zumindest einem anderen Bildsensor (2) ermittelten Position desselben Messraumpunkts dieselbe Position im gemeinsamen Koordinatensystem zuordnet, und
- die mit den einzelnen Bildsensoren (2) erstellten photometrischen Aufnahmen und photogrammetrischen Aufnahmen unter Anwendung der ermittelten Transformationen in ein gemeinsames Koordinatensystem zu überführen und anschließend durch Skalierung anhand der geometrischen Kalibrierung in eine gemeinsame metrisch skalierte 3D-Punktewolke zusammenzuführen.

16. Messsystem (100) nach einem der Ansprüche Anspruch 11 bis 15, **dadurch gekennzeichnet,**
- **dass** das Messsystem in einem Winkel zur Aufnahmerichtung des zumindest einen Bildsensors (2) einstellbare Seitenteile umfasst, wobei auf den Seitenteilen eine Mehrzahl von Beleuchtungseinheiten (4) angeordnet ist, und/oder
- **dass** die Steuereinheit zur Erstellung von fernfeld-photometrischen Aufnahmen dazu ausgebildet ist, die Beleuchtungseinheiten (4), insbesondere eines Seitenteils, gleichzeitig aggregiert zur Abgabe von Licht anzusteuern.

17. Messsystem (100) nach einem der Ansprüche 11 bis 16, **dadurch gekennzeichnet,**
- **dass** das Messsystem mehrere Lichtmusterprojektoren (3) jeweils zur Projektion eines gerichteten Zufallsbilds auf ein zu erfassendes Objekt im Aufnahmebereich des zumindest einen Bildsensors (2) umfasst, und
- **dass** die Steuereinheit dazu ausgebildet ist, die Lichtmusterprojektoren (3) einzeln aufeinanderfolgend zur Projektion eines gerichteten Zufallsbilds anzusteuern und den zumindest einen Bildsensor (2) zur Erstellung jeweils zumindest einer photogrammetrischen Aufnahme pro Projektion eines Zufallsbilds durch einen der Lichtmusterprojektoren (3) anzusteuern.

18. Messsystem (100) nach Anspruch 17, **dadurch gekennzeichnet, dass** die Lichtmusterprojektoren (3) auf dem Zentralkörper (1) jeweils in einem Abstand von 2 bis 20 cm und in einem Winkel von 0° bis 15° um den Bildsensor (2) und zwischen dem zumindest einen Bildsensor (2) und den Beleuchtungseinheiten (4) angeordnet sind.

19. Messsystem (100) nach einem der Ansprüche 11 bis 18, **dadurch gekennzeichnet, dass** ein Bandpassfilter zur Unterdrückung von Umgebungs- und/oder Fremdlicht im optischen Pfad des zumindest einen Bildsensors (2) angeordnet ist.

20. Messsystem (100) nach einem der Ansprüche 11 bis 19, **dadurch gekennzeichnet, dass** das Messsystem
- einen, insbesondere flächig ausgebildeten, Zentralkörper (1), insbesondere mit annähernd sechseckiger Grundfläche, auf dem der zumindest eine Bildsensor (2) und der zumindest eine Lichtmusterprojektor (3) und gegebenenfalls eine oder mehrere Beleuchtungseinheiten (4) angeordnet sind, umfasst und
- zumindest einen, insbesondere rechteckigen oder quadratischen, Seitenteil (5), insbesondere sechs an den sechs Seiten des Zentralkörpers (1) angeordnete Seitenteile (5), auf denen jeweils mehrere Beleuchtungseinheiten (4) angeordnet sind, umfasst,
wobei jeder Seitenteil (5), insbesondere relativ zum Zentralkörper (1), in seinem Winkel zur Aufnahmerichtung des zumindest einen Bildsensors (2) verstellbar ist.

21. Messsystem (100) nach Anspruch 20, **dadurch gekennzeichnet, dass** auf jedem Seitenteil (5) ein Feld von, insbesondere zwölf, Beleuchtungseinheiten (4) in Form von Punktlichtquellen angeordnet ist, wobei die einzelnen Beleuchtungseinheiten (4) durch die Steuerungseinheit einzeln oder gemeinsam aggregiert schaltbar sind.
